## Europäisches Patentamt
## European Patent Office
## Office européen des brevets

(11) Publication number: **0 027 824**
**B1**

(12) **EUROPEAN PATENT SPECIFICATION**

(45) Date of publication of patent specification: **16.01.85**

(21) Application number: **80900732.1**

(22) Date of filing: **17.04.80**

(86) International application number:
**PCT/JP80/00076**

(87) International publication number:
**WO 80/02362 13.11.80 Gazette 80/26**

(51) Int. Cl.⁴: **A 23 K 1/20, A 23 N 17/00**

(54) **COMPRESSION MOLDED FIBROUS MATERIAL AND MOLDING MACHINE THEREFOR.**

(30) Priority: **29.04.79 JP 52813/79**
**28.01.80 JP 8674/80**

(43) Date of publication of application:
**06.05.81 Bulletin 81/18**

(45) Publication of the grant of the patent:
**16.01.85 Bulletin 85/03**

(84) Designated Contracting States:
**CH DE FR GB LI NL SE**

(56) References cited:
**JP-B-50 013 177**
**US-A-3 241 479**

(73) Proprietor: **OSATO, Akira**
**12, Bairinminami-cho**
**Gifu-shi, Gifu 500 (JP)**

(72) Inventor: **OSATO, Akira**
**12, Bairinminami-cho**
**Gifu-shi, Gifu 500 (JP)**

(74) Representative: **Stenger, Alex, Dipl.-Ing. et al**
**Patentanwälte Dipl.-Ing. A. Stenger Dipl.-Ing. W. Watzke Dipl.-Ing. H.J. Ring Kaiser-Friedrich-Ring 70**
**D-4000 Düsseldorf 11 (DE)**

Courier Press, Leamington Spa, England.

## Description

The invention under consideration refers to a machine or device designed to reduce fibrous materials into ultra high density compressed or compact form, the process involved and the resulting form or shape or the fibrous materials so compressed.

Various equipment or devices have been used and developed for the compressing of fibrous materials. For animal feeds like pasturage and sugarcane leaves, the usual forms are the cubes and the cylindrical type. In the case of cylindrical forms or wafers, the diameter is generally 5 to 10 cm and with respect to cubes, 3 to 6 cm per side, the specific gravity of these are 0,6 g/cm³. Also, there are pellets in cylindrical or cube form with a diameter or length of one side from 3 to 6 cm with a specific gravity of 0,9 /cm³.

However, when the fibrous materials in cube or cylindrical form are contained in bags, the specific gravity of the total package will be far less than that of individual pellets or cubes; obviously, this is due to the space which is bound to be wasted between each cube. Besides, wafers and cubes are apt to be broken or crumbled during handling and delivery. Thus, more wastage and expenses are incurred.

There are also baled forms of fibrous material. Ordinarily, high density bale is say 45 to 70 kilograms with specific gravity of 0,3 g/cm³ or super high density bale of 725 kilograms measuring 1,3 cubic meter and specific gravity of 0,56 g/cm³.

There are even bigger machines utilizing hydraulic or mechanical power achieving the specific gravity of 1,00 g/cm³. But the unit size of such is in most cases 1 cubic meter per piece weighing 1 metric ton. If this is meant for feeds, the same is indeed too heavy to handle and will need extra hands and equipment to break the same into appropriate form.

Except for pellets, compressed fibrous feeds are simply pressed together, yet preserving its natural resiliency. Because of the resilient nature of the fibrous material, any slight change in the temperature, moisture, impact or other similar causes during delivery and handling will result in crumbling or destruction of the compressed form.

Various devices and techniques have been developed and applied to avoid unnecessary wastage and losses. For example, provisions for cooling and heating have been made, projectiles attached to plungers and other similar devices introduced to protect or safeguard the materials. However, none of these innovations were good enough to solve the problems.

Solutions to the problems referred to above will bring about numerous benefits. Among them are: that the handling will become easier, cost of production and transportation will be cut down considerably, quality will be more stabilized and the product could be longer preserved.

One of the objects of this invention is to prevent or avoid crumbling of fibrous feeds during delivery and storage. Another object is to enable easy and smooth separation of fibrous materials into pieces during the preparation period.

Further object is to provide an ultra high density compressing and forming machine or device for fibrous materials featuring simpler mechanism, longer durability, substantial power saving and higher efficiency.

Further importance of this invention will be further appreciated from the succeeding explanations, though most of them are stated in the claims of this invention. When the invention is put into operation, various benefits will be realized.

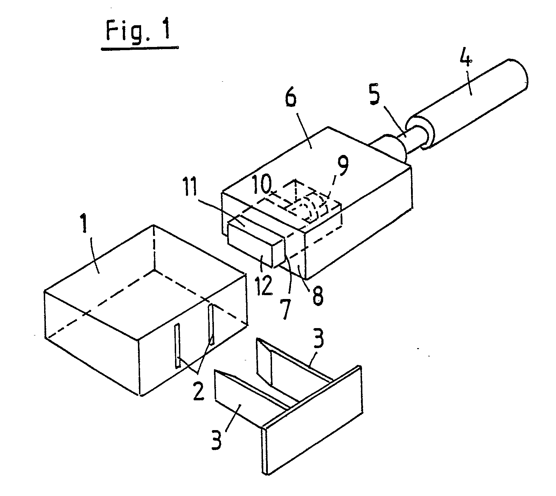

The corresponding drawings or illustrations showing the different parts composing the machine or device and the various stages involved in the compressing process of fibrous materials are hereby provided by the inventor. They are marked or designated as Figures 1, 2, 3, 4, 5, 6 and 7. Brief descriptions of the drawings:

*Figure 1* is a perspective view of the compressing and forming device or equipment embodying this invention.

*Figure 2* is a profile sectional view showing the central portion of fibrous material being pressed by the compress-forming equipment.

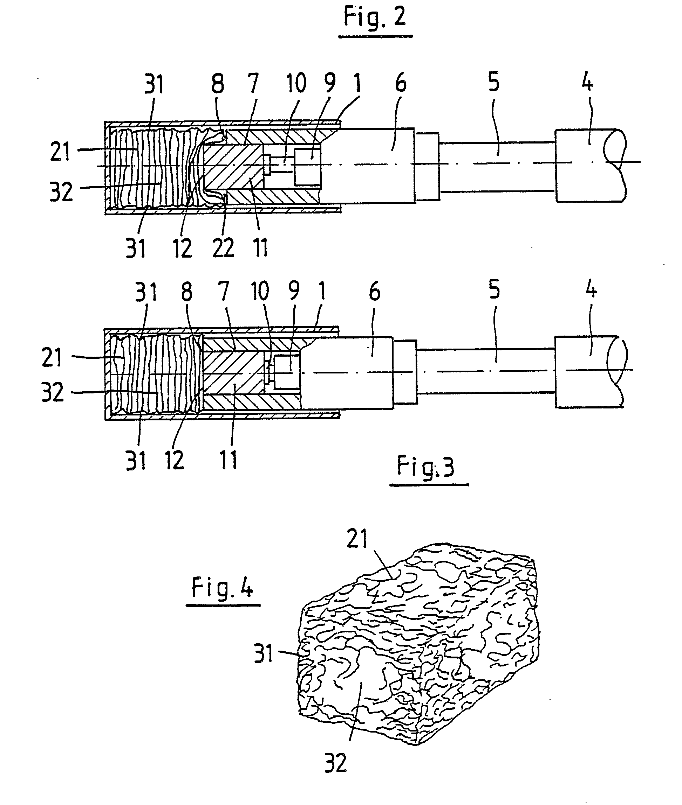

*Figure 2* is a profile sectional view showing the entire surface of fibrous material being pressed by the same equipment given in Figure 2.

*Figure 4* is a perspective view of the fibrous feed (fodder) processed under this invention.

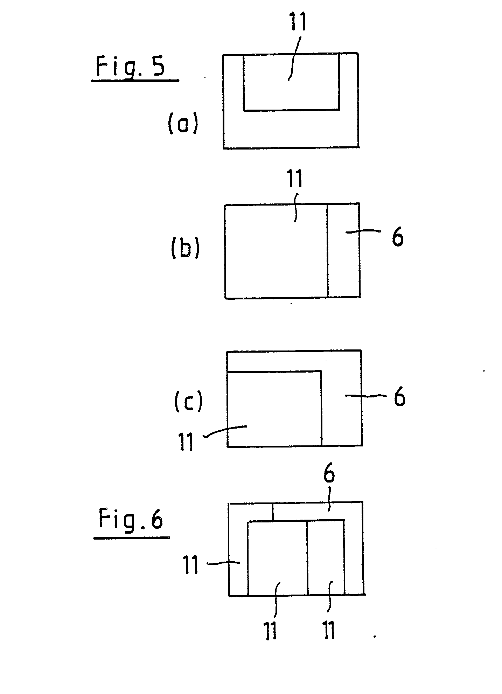

*Figure 5* and *Figure 6* are illustrations showing other examples of variations of compression by primary and secondary plungers.

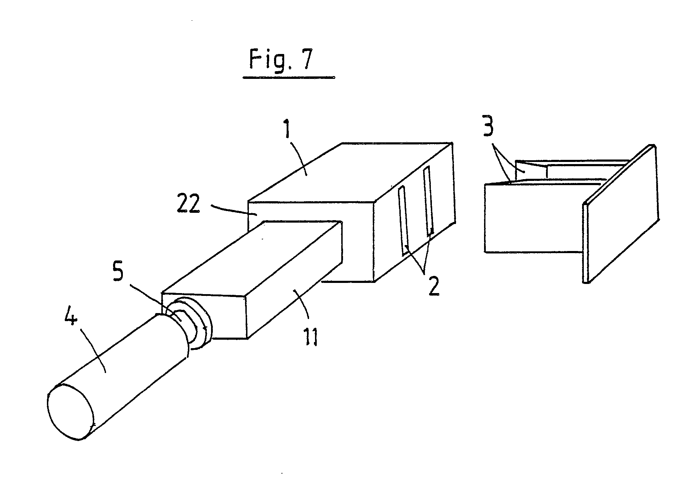

*Figure 7* is a partial perspective view of the single plunger type equipment under this present invention.

Figure 1 shows an embodiment of this invention. Forming vessel 1 is prism shaped and can contain any fibrous material 21 like hay, rice straw, etc. (Note: Forming vessel is not limited to prism shaped but may take some other shape.)

One or more slits 2 are opened on one or two sides facing each other on the forming vessel 1.

Cutter 3 has a blade or blades in corresponding positions to slit or cut.

Fibrous materials 21 can thus be cut into desired size by projecting cutters 3 into the forming vessel 1 through slit(s) 2.

Pressure device 4 is placed facing the forming vessel 1, the pressure device serving as the main pressing equipment. Secondary plunger 6 which is to be projected into the forming vessel 1, is mounted at the head of the rod 5.

Secondary plunger 6 is also prism shaped similar to forming vessel 1 in shape but shall have some clearance or space between the inner walls of forming vessel 1 and the secondary plunger 6 itself, although the secondary plunger 6 can be made without clearance with the walls of forming vessel 1.

Recess 7 is made in the central part of pressing face 8 of secondary plunger 6.

Pressing face 8 of secondary plunger 6 is to exert pressure on the fringe or periphery portion 31 of the fibrous material 21 placed inside the forming vessel 1.

Press jack 9, as a secondary compress equipment, shall be mounted inside the recess 7 of the secondary plunger 6.

Primary plunger 11 is fixed on top of the rod 10 attached to the press jack 9, movable back and forth and can be projected ahead of press surface 8 of secondary plunger 6.

Front side of the primary plunger 11 serves as a press surface 12 and exerts pressure in the central portion 32 of fibrous material 21 by being projected ahead of the second plunger 6.

The following are the processing methods, functions and effects during the operation of this invention.

First, fibrous materials like hay, in appropriate length shall be fed as evenly as possible into the forming vessel 1. Then thrust the cutter 3 into the forming vessel 1 through the slit(s) 2, thus the fibrous material 21 is cut into desired size or portion.

Then, activate the press jack 9 and in so doing, the primary plunger 11 shall be projected out of the recess 7; then project the secondary plunger 6 forward into the forming vessel 1 with the primary plunger 11 protruded; thus, the press surface 12 presses the central portion 32 of the fibrous material 21. As a result, each fiber in this area will be pressed to each other in more or less natural straight line. At this stage, the clearance 22 between the inside walls of forming vessel 1 and the primary plunger 11 causes the fringe or periphery portion 31 of fibrous materials 21 to remain comparatively protrudent to the central portion 32. Each fiber of the fringe or periphery portion 31 at this stage gets entangled with each other curled in various angles and curves due to the stress of the above-mentioned press mainly in the central portion 32. By this pehnomenon, the edges of the cut fibrous material 21 is somehow rejoined as far as the fringe 31 is concerned, thus holding the portions of the fibrous material 21 but by the cutter 3 together after the completion of the entire press forming process.

Finally, when the central portion 32 is compressed as desired, activate pressure device 4 projecting the secondary plunger 6 forward while the primary plunger 11 recedes at the same rate. This operation shall be carried out continuously following the initial compression of the central portion 32 by primary plunger 11 as mentioned above. By doing so. the fringe or periphery portion 31 is compressed to a suitable extent depending upon the nature of the fibrous material 21 with the fibers curled and holding the pressed form in the parallelepipedon shape as shown in Figure 4 at more or less the compressed size after being taken out of the forming vessel 1.

It is noteworthy to mention that many studies made and experimental data gathered in the past on high compression forming and rate of expansion of fibrous plant material show that "the cut length of test material is an important factor in its formability, and, the more materials used, the more each grass gets entwisted with each other. This prevents the expansion of the materials. As a consequence, the rate of expansion after the compression becomes low". The processed form (Figure 4) is a realization of the above-mentioned finding. Furthermore, the present invention will be applying this phenomenon of entwistment in two different ways in order to toughen the stability of the compressed form.

Due to the resultant high stability of the compressed fibrous material brought about by the process of this invention, the crumbling and spoilage during transportation, handling and storage will be minimized. Likewise, processed materials could easily be split or separated into desired blocks by hand because the same is already cut in the initial stage and yet held together merely by the entwistment of the fringe portion.

To further conceptualize the impact and meaning of this invention to the world, particularly the animal feed industry, detailed discussions by the inventor becomes necessary. Hence, the following facts adduced from our studies and observations:

Under the present invention, the compression work is divided into two and the same. is carried out by two plungers, one as primary plunger 11 and another as secondary plunger 6. This method enables us to reduce the necessary output power of the plungers 6 & 11, pressure device 4 and press jack 9 driving with staggered timing compared to usual equipment with single plunger to obtain the same effect. The two plungers can work simultaneously or staggeredly. As a result, the machine under this invention can be smaller in size and lighter in weight, thus making it even portable and easier to handle.

Descpite the dual compression by two plungers, the secondary plunger 6 can work continuously without stop after the initial compression by primary plunger 11. Hence, no time is wasted. It is also possible to mount one or more additional plungers other than the existing secondary plunger 6 and compress the fibrous material 21 in numerous stages.

In the present embodiment of the invention, the fibrous material 21 is compressed in the central portion 32 first, by the primary plunger 11, and then, the outside fringe 31 secondary plunger 6. It is also possible, as shown in Figure 5 (a—c), to compress upper, lower side or corner portion of the fibrous material 21 by the primary plunger and then the rest, by the additional plungers. Also, as shown in Figure 6, the pressing surface of this equipment can be subdivided into more than three sections and each section can be compressed by numerous primary and additional plungers with different timing to attain similar results.

When the single plunger system is required as shown in Figure 7, it is possible to compress fibrous materials by single compress action by a plunger which is made to provide clearance 22 of optional size between the outer surface of the plunger 11 and the inner wall of the forming cylinder 1. And yet, the compressed material is easily broken into desired portion with an adequate adjustment of cutter.

Now, the features of the equipment embodying the present invention, in comparison with the usual equipment, will be mentioned or explained below through experiments conducted by this inventor. And in the experiments conducted, we were able to prove that the invention sought to be protected far excels the usual methods, applied in fibrous compression in terms of power savings, manoeuvrability, convenience and the like.

Sugarcane leaves and napier grass were used as testing materials in our experiments. To attain a specific gravity of 1,2 g/cm³, the pressure required was 360 kg/cm². For the experiments, the inventor applied a forming vessel 1 with an area of cross section 800 cm (40 cm × 20 cm) and a total pressing surface of 770 cm² (39,5 cm × 19,5 cm).

*Comparative table* is as below:

In this invention, the output power required was 151 tons for the primary plunger and 126 tons for the secondary plunger. By programming each compression work by respective plungers one at a time, one pressure device 4 with 151 tons output power operated two plungers 11 and 6 smoothly although partly assisted by the press jack. The output power of the press jack 9 was comparatively small.

When forming the same size and density of fibrous material, the present invention, therefore, saves as much as 45,5% of power from the usual equipment. This is a tremendous advantage compared with the usual equipment not only in operational expense, but also on the cost of equipment itself, maintenance and depreciation.

In this experiment, the moisture contents of the materials used were 40%, 12% and 9%. Six weeks after the compression forming, it was observed that the sample with 40% moisture content was found strongly entwisted and hard to break loose. On the surface there were some molds and the color turned brownish. But the inside kept greenish and no molds were found. This is attributed to the green juice squeezed out at the last stage of compression.

As to the samples with 12% and 9% moisture content, the compressed samples were still in stable condition and without expansion. There were no changes in the greenish color, still maintaining good aroma of the hay, no molds and easy to split by hand.

| | Front Pressure Surface of the Plunger | Pressure Gauge kg/cm² | Power Requirement |
|---|---|---|---|
| Usual equipment mechanism | 39,5 × 19,5 equal 770 cm² | 360 | 277 ton |
| Present invention mechanism | Primary plunger pressure surface (12) area 30 × 14 equal 420 cm² | | 151 ton |
| | | 360 | |
| | Secondary plunger pressure surface (8) area 39,5 × 19,5 − (12) = 350 cm² | | 126 ton |

In the above embodiment of the present invention, hydraulic pressure device(s) have been used to activate plungers 6 and 11. But this can, of course, be substituted by mechanical or any other systems.

Forming vessel, secondary and primary plungers may also be in other shapes and sizes as long as the same result can be obtained. The parallelepipedon shape adopted by the inventor does not therefore exclude other forms so long as the same may prove to be more advantageous.

We want to make it clear that the useful application of the present invention is not limited to animal feeds alone. It embraces any and all kinds of fibrous materials or matter capable of being the subject of compression.

## Claims

1. A compression molded fibrous material such as vegetable feed, characterised in that at least part of the periphery portion (31) of the fibrous material (21) is curled and entwined, while the rest of the fibrous material (21) is compressed generally linearly and is not curled.

2. A compression molded fibrous material according to claim 1, characterised in that the fibrous material (21) is in the form of a rectangular parallelepiped which peripheray portion (31) parallel to the direction of compression is curled and entwined, while the central portion (32) is compressed generally linearly and is not curled.

3. A compression molded fibrous material according to claim 1 or 2, characterised by one or more incisions made parallel to the compression surface of the periphery portion (31) of the fibrous material (21) and ready to be split in line with the incisions.

4. A compression machine for compressing fibrous material such a vegetable feed comprising a forming vessel (1) wherein the fibrous material (21) is charged, a main plunger (11) being slidably incorporated within the forming vessel (1) to compress the fibrous material (21) and means to actuate the main plunger (11), characterised in that the main plunger (11) has a predetermined clearance (22) between the surface of the main plunger (11) and the inner walls of the forming vessel (1) so that the central portion (32) of the fibrous material (21) being in contact with the press surface (12) of the main plunger (11) is generally linearly compressed, while the periphery portion (31) of the fibrous material (21) defined by the clearance (22) is curled and entwined.

5. A compression machine according to claim 4, characterised by an auxiliary plunger (6) incorporating the main plunger (11) and compressing the curled and entwined periphery portion (31) of the fibrous material (21) and by means to actuate these plungers (6, 11) at a different timing.

6. A compression machine according to claim 5, characterised in that the auxiliary plunger (6) has a recess (7) in the middle of the press surface (8) and the main plunger (11) is incorporated in the recess (7), so that the peripheral press surface (8) of the auxiliary plunger (6) can exert pressure on the fibrous material (21).

7. A compression machine according to claim 6, characterised in that the main plunger (11) is movably incorporated in the recess (7) of the auxiliary plunger (6) and can exert the pressure on the central portion (32) of the fibrous material (21) in a manner where the press surface (12) of the main plunger (11) is protruded ahead of the press surface (8) of the auxiliary plunger (6).

8. A compression machine according to claim 7, characterised by hydraulic means (4) to actuate the auxiliary plunger (6) within the forming vessel (1) and hydraulic means (9) to actuate the main plunger (11) in and out of the recess (7).

## Patentansprüche

1. Unter Druck geformter faseriger Stoff, beispielsweise Pflanzenfutter, dadurch gekennzeichnet, daß wenigstens teilweise der Randbereich (31) des faserigen Stoffes (21) gekräuselt und verflochten ist, während der Rest des faserigen Stoffes (21) im wesentlichen linear zusammengepreßt und nicht gekräuselt ist.

2. Unter Druck geformter faseriger Stoff nach Anspruch 1, dadurch gekennzeichnet, daß die faserige stoff (21) die Form eines rechtwinkligen Parallelepipeds aufweist, dessen zur Preßrichtung paralleler Randbereich (31) gekräuselt und verflochten ist, während der Mittelbereich (32) im wesentlichen linear zusammengepreßt und nicht gekräuselt ist.

3. Unter Druck geformter faseriger Stoff nach Anspruch 1 oder 2, gekennzeichnet durch ein oder mehrere Einschnitte, die parallel zur Preßfläche des Randbereiches (31) des faserigen Stoffes (21) angebracht sind, wobei dieser längs dieser Einschnitte teilbar ist.

4. Druckpresse zum Zusammenpressen von faserigem Stoff, beispielsweise Pflanzenfutter, mit einem Formungsbehälter (1), in den der Faserige Stoff (21) einfüllbar ist, mit einem Hauptkolben (11), der innerhalb des Formungsbehälters (1) zum Zusammenpressen des faserigen Stoffes (21) verschiebbar angeordnet ist, und mit einer Vorrichtung zum Betätigen des Hauptkolbens (11), dadurch gekennzeichnet, daß der Hauptkolben (11) einen vorherbestimmten Zwischenraum (22) zwischen der Oberfläche des Hauptkolbens (11) und den Innenwänden des Formungsbehälters (1) aufweist, so daß der Mittelbereich (32) des faserigen Stoffes (21), der mit der Preßfläche (12) des hauptkolbens (11) in Kontakt steht, im wesentlichen linear zusammengepreßt ist, während der durch den Zwischenraum (22) definierte Randbereich (31) des faserigen Stoffes (21) gekräuselt und verflochten ist.

5. Druckpresse nach Anspruch 4, gekennzeichnet durch einen Hilfskolben (6), innerhalb dem der Hauptkolben (11) angeordnet ist und der den gekräuselten und verflochtenen Randbereich (31) des faserigen Stoffes (21) zusammenpreßt, und durch eine Vorrichtung zum Betätigen dieser Kolben (6, 11) zu unterschiedlichen Zeiten.

6. Druckpresse nach Anspruch 5, dadurch gekennzeichnet, daß der Hilfskolben (6) eine Aussparung (7) in der Mitte der Preßfläche (8) besitzt und der Hauptkolben (11) innerhalb der Aussparung (7) angeordnet ist, so daß die äußere Preßfläche (8) des Hilfskolbens (6) einen Druck auf den faserigen Stoff (21) ausübt.

7. Druckpresse nach Anspruch 6, dadurch gekennzeichnet, daß der Hauptkolben (11) verschiebbar innerhalb der Aussparung (7) des Hilfskolbens (6) angeordnet ist und den Druck auf den Mittelbereich (32) des faserigen Stoffes (21) in einer Weise ausüben kann, bei der die Preßfläche (12) des Hauptkolbens (11) aus der Preßfläche (8) des Hilfskolbens (6) heraustritt.

8. Druckpresse nach Anspruch 7, gekennzeichnet durch eine Hydraulikvorrichtung (4) zum Betätigen des Hilfskolbens (6) innerhalb des Formungsbehälters (1) und durch eine Hydraulikvorrichtung (9) zum Betätigen des Hauptkolbens (11) in die Aussparung (7) hinein und aus dieser heraus.

## Revendications

1. Matière fibreuse moulée par compression telle que de la nourriture végétale, caractérisé en ce qu'au moins un portion de la partie périphérique (31) de la matière fibreuse (21) est bouclée en entrelacée, tandis que le reste de la matière fibreuse (21) est comprimé globalement linéairement et n'est pas bouclé.

2. Matière fibreuse moulée par compression selon la revendication 1, caractérisée en ce que la matière fibreuse (21) se présente sous la forme d'un parallélépipède rectangle dont la partie péripérique (31) parallèle à la direction de la compression est bouclée et entrelacée, tandis que la partie centrale (32) est comprimée globalement linéairement et n'est pas bouclée.

3. Matière fibreuse moulée par compression selon la revendication 1 ou 2, caractérisée par une ou plusieurs incisions réalisées parallèlement à la surface de compression de la partie parallèlement à la surface de compression de la partie périphérique (31) de la matière fibreuse (21) est prête à être divisée en alignement sur les incisions.

4. Machine de compression destinée à comprimer une matière fibreuse telle que de la nourriture végétale, comprenant un récipient (1) de façonnage dans lequel la matière fibreuse (21) est chargée, un plongeur principal (11) pouvant être introduit par glissement dans le récipient (1) de façonnage pour comprimer la matière fibreuse (21) et des moyens destinés à actionner le plongeur principal (11), caractérisée en ce que le plongeur principal (11) établit un jeu prédéterminé (22) entre la surface du plongeur principal (11) et les parois intérieures du récipient (1) de façonnage afin que la partie centrale (32) de la matière fibreuse (21), en contact avec la surface (12) de pressage du plongeur principal (11), soit comprimée globalement linéairement, tandis que la partie périphérique (31) de la matière fibreuse (21) définie par le jeu (22) est bouclée en entrelacée.

5. Machine de compression selon la revendication 4, caractérisé par un plongeur auxiliaire (6) dans lequel le plongeur principal (11) est incorporé et qui comprime la partie périphérique bouclée et entrelacée (31) de la matière fibreuse (21), et par des moyens destinés à actionner ces plongeurs (6, 11) à un minutage différent.

6. Machine de compression selon la revendication 5, caractérisé en ce que le plongeur auxiliaire (6) présente un évidement (7) au milieu de la surface de pressage (8) et le plongeur principal (11) est incorporé dans l'évidement (7) afin que la surface périphérique (8) de pressage du plongeur auxiliaire (6) puisse exercer une pression sur la matière fibreuse (21).

7. Machine de compression selon la revendication 6, caractérisée en ce que le plongeur principal (11) est incorporé de façon mobile dans l'évidement (7) du plongeur auxiliaire (6) et peut exercer une pression sur la partie centrale (32) de la matière fibreuse (21) de manière que la surface de pressage (12) du plongeur principal (11) dépasse en avant de la surface de pressage (8) du plongeur auxiliaire (6).

8. Machine de compression selon la revendication 7, caractérisée par des moyens hydrauliques (4) destinés à actionner le plongeur auxiliaire (6) à l'intérieur du récipient (1) de façonnage et des moyens hydrauliques (9) destinés à actionner le plongeur principal (11) pour le faire entrer dans l'évidement (7) et l'en faire sortir.

## Fig. 1

Fig. 2

Fig. 3

Fig. 4

<u>Fig. 5</u>

(a)

11

(b)

11

6

(c)

6

11

<u>Fig. 6</u>

6

11

11    11

## Fig. 7